# EUROPEAN PATENT APPLICATION

(11) **EP 4 378 902 A1**
(43) Date of publication of application: **05.06.2024**
(21) Application number: 22849183.3
(22) Date of filing: 05.07.2022
(51) Int. Cl.: C03B 37/005, C09C 1/62

(54) **FLAKY PARTICLES AND BRILLIANT PIGMENT**

(30) Priority: 27.07.2021 JP 2021122667
(71) Applicant: NIPPON SHEET GLASS COMPANY, LIMITED, Tokyo 108-6321 (JP)
(72) Inventor: WAKAMIYA, Takashi, Tokyo 108-6321 (JP); KATAGIRI, Shinya, Tokyo 108-6321 (JP); MIKAMI, Shinji, Tokyo 108-6321 (JP)
(74) Representative: Cabinet Beau de Loménie
(86) International application number: PCT/JP2022/026772
(87) International publication number: WO 2023/008118

(57) **Abstract**

Flaky particles have a particle size distribution in which a value of D90/D10 is 2.0 or more and 3.0 or less, D10 is 4.7 µm or more and 25 µm or less, and D50 is 17 µm or more and 40 µm or less, where D10 is defined as a particle diameter at 10% of a cumulative volume from a smaller particle diameter, D50 is defined as a particle diameter at 50% of the cumulative volume from the smaller particle diameter, and D90 is defined as a particle diameter at 90% of the cumulative volume from the smaller particle diameter, and the flaky particles have a particle projected area distribution in which the following (i) or (ii) is satisfied: (i) when D50 is 17 µm or more and less than 30 µm, A10 is 100 µm² or more; and (ii) when D50 is 30 µm or more and 40 µm or less, A10 is 200 µm² or more, where A10 is defined as a projected area of a particle in a 10th percentile of the total number of particles in ascending order of particle projected area.

## Description

### TECHNICAL FIELD

The present invention relates to flaky particles and a glitter pigment.

### BACKGROUND ART

A glitter pigment typically includes flaky particles. The flaky particles are, for example, mica, synthetic mica, talc, glass flakes, silica flakes, or flaky bismuth oxychloride. A glitter pigment also includes a coating film on the surface of each of flaky particles in some cases. The coating film may be either a single-layer film or a multi-layer film. The layer forming the coating film is, for example, a metal oxide layer including titanium oxide, iron oxide, or the like, or a metal layer including silver, copper, aluminum, or the like.

According to the disclosure in Patent Literature 1, flaky particles, when used in a glitter pigment, have enhanced glitter and graininess by having a particle size distribution in which the value of D90/D10, D10, and the maximum particle diameter are each limited within a fixed range, where D10 is defined as a particle diameter at 10% of a cumulative volume from a smaller particle diameter and D90 is defined as a particle diameter at 90% of the cumulative volume from the smaller particle diameter. In Patent Literature 1, the particle diameter of a flaky particle refers to the light scattering equivalent diameter obtained for the flaky particle measured by the laser diffraction/scattering method.

### CITATION LIST

### Patent Literature

Patent Literature 1: JP4652445 B

### SUMMARY OF INVENTION

### Technical Problem

Measurement by the laser diffraction/scattering method is in accordance with the principle that particles irradiated with a laser beam vary in scattered light angular distribution (scattering pattern) with the particle diameter. The optical model assumed in the laser diffraction/scattering method is spherical particles. Accordingly, in the case where measurement target particles are non-spherical particles, the non-spherical particles are replaced with spherical particles exhibiting a scattering pattern that best matches the measured scattering pattern. The volumetric particle size distribution of the spherical particles after replacement is obtained as the measurement results.

Flaky particles such as glass flakes are non-spherical particles and have two-dimensional shapes less affected by the thickness. Accordingly, in the laser diffraction/scattering method in which evaluation is performed by replacing non-spherical particles with three-dimensional spherical particles, flaky particle evaluation tends to be overvaluation on coarse particles having large areas and undervaluation on fine particles having small areas. In particular, the presence of fine particles having small areas is substantially ignored, which can result virtually in no quantification of such fine particles. Fine particles having small areas that cannot be quantified by the laser diffraction/scattering method do not contribute to the glitter and graininess of flaky particles. Consequently, using flaky particles including a large amount of such fine particles deteriorates the glitter and graininess of a glitter pigment. Furthermore, even using flaky particles having numerically equivalent particle size distributions can generate a difference in the design of a glitter pigment, causing a quality problem.

One object of the present invention is to improve flaky particles suitable for a glitter pigment. Another object of the present invention is to improve a glitter pigment.

### Solution to Problem

One aspect of the present invention provides flaky particles, wherein
the flaky particles have a particle size distribution in which a value of D90/D10 is 2.0 or more and 3.0 or less, D10 is 4.7 µm or more and 25 µm or less, and D50 is 17 µm or more and 40 µm or less,
where D10 is defined as a particle diameter at 10% of a cumulative volume from a smaller particle diameter, D50 is defined as a particle diameter at 50% of the cumulative volume from the smaller particle diameter, and D90 is defined as a particle diameter at 90% of the cumulative volume from the smaller particle diameter, and
the flaky particles have a particle projected area distribution in which the following (i) or (ii) is satisfied:
   (i) when D50 is 17 µm or more and less than 30 µm, A10 is 100 µm² or more; and
   (ii) when D50 is 30 µm or more and 40 µm or less, A10 is 200 µm² or more,
where A10 is defined as a projected area of a particle in a 10th percentile of the total number of particles in ascending order of particle projected area.

Another aspect of the present invention provides a glitter pigment including:
flaky particles; and
at least one layer formed on at least a portion of a surface of each of the flaky particles, the at least one layer being selected from the group consisting of a metal layer and a metal oxide layer, wherein
the glitter pigment has a particle size distribution in which a value of D90/D10 is 2.0 or more and 3.0 or less, D10 is 4.7 µm or more and 25 µm or less, and D50 is 17 µm or more and 40 µm or less,
where D10 is defined as a particle diameter at 10% of a cumulative volume from a smaller particle diameter, D50 is defined as a particle diameter at 50% of the cumulative volume from the smaller particle diameter, and D90 is defined as a particle diameter at 90% of the cumulative volume from the smaller particle diameter, and
the glitter pigment has a particle projected area distribution in which the following (i) or (ii) is satisfied:
   (i) when D50 is 17 µm or more and less than 30 µm, A10 is 100 µm² or more; and
   (ii) when D50 is 30 µm or more and 40 µm or less, A10 is 200 µm² or more,
where A10 is defined as a projected area of a particle in a 10th percentile of the total number of particles in ascending order of particle projected area.

### Advantageous Effects of Invention

According to the present invention, it is possible to improve flaky particles suitable for a glitter pigment and a glitter pigment.

### BRIEF DESCRIPTION OF DRAWINGS

FIG. 1 is a partial cross-sectional view schematically showing an example of a device for manufacturing glass flakes as flaky particles of Embodiment 1.
FIG. 2 is a graph showing the colorimetric results for glass flakes after surface coating of Example 1 and Comparative Example 1.
FIG. 3 is a graph showing the colorimetric results for glass flakes after surface coating of Example 2 and Comparative Example 2.
FIG. 4 is a graph showing the colorimetric results for glass flakes after surface coating of Example 3 and Comparative Example 3.
FIG. 5 is a graph showing the colorimetric results for glass flakes after surface coating of Example 4 and Comparative Example 4.

### DESCRIPTION OF EMBODIMENTS

Embodiments of the present invention will be described below. The following description is not intended to limit the present invention to specific embodiments.

### (Embodiment 1)

In Embodiment 1, the flaky particles of the present invention will be described.

Flaky particles of the present embodiment have a particle size distribution in which a value of D90/D10 is 2.0 or more and 3.0 or less, D10 is 4.7 µm or more and 25 µm or less, and D50 is 17 µm or more and 40 µm or less, where D10 is defined as a particle diameter at 10% of a cumulative volume from a smaller particle diameter, D50 is defined as a particle diameter at 50% of the cumulative volume from the smaller particle diameter, and D90 is defined as a particle diameter at 90% of the cumulative volume from the smaller particle diameter. The flaky particles have a particle projected area distribution in which the following (i) or (ii) is satisfied:
(i) when D50 is 17 µm or more and less than 30 µm, A10 is 100 µm² or more; and
(ii) when D50 is 30 µm or more and 40 µm or less, A10 is 200 µm² or more,
where A10 is defined as a projected area of a particle in a 10th percentile of the total number of particles in ascending order of particle projected area.

In the present description, flaky particles are, for example, scaly particles having a thickness in a range of 0.1 µm to 8.0 µm and an aspect ratio (average particle diameter/average thickness) of, for example, approximately 2 to approximately 100. The average particle diameter refers to the median diameter. The particle diameter of a flaky particle refers to the light scattering equivalent diameter obtained for the flaky particle measured by the laser diffraction/scattering method. The light scattering equivalent diameter is defined as the diameter of a sphere that exhibits a light scattering pattern closest to the light scattering pattern of a particle obtained by measurement and that has the same refractive index as the particle, according to, for example, "Saishin Funtai Bussei Zusetsu (Physical Properties of Powder Particles with Illustrations, Latest Version), Third Edition" (issued by Yutaka KURATA, published by NGT Co., June 30, 2004).

Particle size distribution is an index indicating what particle diameters of particles are included in a measurement target particle group in what proportions. In the present description, the particle size distribution is measured by the laser diffraction/scattering method. In the particle size distribution in the present description, volume is used as the measure of an amount of particles. The definitions of D10, D50, and D90 are as described above. D50 refers to the average particle diameter (median diameter). D90/D10 can be an index indicating the range of particle size distribution. In the case where D50 exhibits almost equal values, particles with a higher value of D90/D10 have a wider range of particle size distribution, and particles with a lower value of D90/D10 have a narrower range of particle size distribution (that is, have a lower content of fine particles and coarse particles).

As specified in JIS Z 8827-1 (static image analysis methods) and JIS Z 8827-2 (dynamic image analysis methods), there are evaluation methods for performing particle size analysis on images acquired with an imaging device. Such image analysis methods can measure the projected areas of individual particles.

In the present description, particle projected area distribution is an index indicating what projected areas of particles are included in a measurement target particle group in what proportions, and is measured on the basis of the projected areas of particles determined by an image analysis method. The definition of A10 is as described above. That is, in the particle projected area distribution, A10 means the projected area of a particle in the 10th percentile of the total number of particles in ascending order of particle projected area. For example, in the case where the total number of particles is 10000, the projected area of the 1000th particle in ascending order of particle projected area is A10. Flaky particles are non-spherical particles and have two-dimensional shapes less affected by the thickness. Accordingly, a particle projected area distribution measured by an image analysis method exhibits an enhanced accuracy in evaluation for coarse particles and fine particles included in flaky particles, as compared with a volumetric particle size distribution measured by the laser diffraction/scattering method.

The flaky particles of the present embodiment have a particle size distribution in which the value of D90/D10 is 2.0 or more and 3.0 or less, D10 is 4.7 µm or more and 25 µm or less, and D50 is 17 µm or more and 40 µm or less. The particle size distribution is narrow in range. This indicates a low amount of fine particles and coarse particles included. In addition, the flaky particles of the present embodiment have the particle projected area distribution in which the above (i) or (ii) is satisfied, and consequently have a reduced content of fine particles having small areas that cannot be quantified by the laser diffraction/scattering method. Such fine particles do not contribute to the glitter and graininess of the flaky particles. Therefore, the flaky particles of the present embodiment, for example when used in a glitter pigment, enhance the glitter and graininess. Moreover, owing to a reduced content of coarse particles as well, the flaky particles of the present embodiment, for example when used in a pigment for a paint, can suppress the occurrence of a problem such as filter clogging or detection as foreign substances in a coating film. In recent years, advancements have been made in coating raw materials, coating techniques, and coating film configurations. For this reason, in the case where flaky particles are used, for example, in a pigment for a paint, relaxed use restrictions are placed on the maximum particle diameter as long as the flaky particles have a particle size distribution with the value of D90/D10 controlled to 2.0 or more and 3.0 or less so as to have a reduced content of coarse particles.

The size of fine particles that affects the glitter and graininess varies with the particle size distribution. Accordingly, in the present embodiment, the numerical range of A10 is defined for two separate cases: (i) when D50 is 17 µm or more and less than 30 µm; and (ii) when D50 is 30 µm or more and 40 µm or less.

The flaky particles of the present embodiment, for example, can be used by themselves alone as a pearlescent pigment or a metallic luster pigment, or can be used as the substrate of a glitter pigment such as a pearlescent pigment or a metallic luster pigment. In the case where the flaky particles are used as the substrate of a glitter pigment, a metal layer or a metal oxide layer should be formed on at least a portion of the surface of each of the flaky particles, and the metal layer or the metal oxide layer preferably coats the entire surface of the substrate.

The flaky particles of the present embodiment, for example when used as the substrate of a glitter pigment, are, for example, mica, synthetic mica, talc, glass flakes, silica flakes, or flaky bismuth oxychloride. Glass flakes among these flaky particles are preferably used, because glass flakes can achieve a higher transparency and a lower amount of fine particles included accentuates more this high transparency.

In the case where the flaky particles of the present embodiment are used alone as a glitter pigment, flakes formed of a metal such as aluminum or copper (metal flakes), fish scale foil, flaky bismuth oxychloride, or the like can be used.

In the flaky particles of the present embodiment, to further narrow down the range of the particle size distribution, the value of D90/D10 may be, for example, 2.6 or more and 2.9 or less.

The upper limit value for A10 of the flaky particles of the present embodiment is not particularly limited. (i) When D50 is 17 µm or more and less than 30 µm, A10 may be, for example, 300 µm² or less. (ii) When D50 is 30 µm or more and 40 µm or less, A10 may be, for example, 400 µm² or less.

The following describes a method for producing flaky particles having a particle size distribution in which the value of D90/D10 is 2.0 or more and 3.0 or less, D10 is 4.7µm or more and 25µm or less, and D50 is 17µm or more and 40µm or less, and having a particle projected area distribution in which the above (i) or (ii) is satisfied.

### (Classification)

The particle size of flaky particles is adjusted by, for example, classification, so that particle size distribution and particle projected area distribution as described above can be achieved. A use example of sieve classification will be described here. Sieve classification can be performed with, for example, a dry vibration sieve. First, coarse particles are removed with a sieve having a predetermined opening size or larger (having a coarse mesh), and then fine particles are removed with a sieve having a predetermined opening size or smaller (having a fine mesh). Thus, flaky particles having the particle size distribution and the particle projected area distribution of the present embodiment can be obtained. In this case, using ultrasonic vibration in combination can further enhance the effect of removing the fine particles. The opening size of a sieve to be used here should be selected as appropriate according to the particle size of particles before sieving, desired values of D50, D90/D10 (range of the particle size distribution), and A10 of flaky particles to be obtained, and so on. Moreover, the coarse particles removed can be reused through repulverization and reclassification. Furthermore, the fine particles removed can be used for other products and so on.

A method for producing the flaky particles of the present embodiment will be described with use of glass flakes as an example. First, glass flakes are manufactured by a method such as the blowing process disclosed in JP S45(1970)-3541 B or the method disclosed in JP S41(1966)-17148 B. Here, a method for manufacturing glass flakes by the blowing process will be described. The blowing process is a process in which a molten glass material continuously discharged from a molten glass source is stretched while being inflated into a hollow shape so as to obtain a thin glass film. A glass film obtained through this process is pulverized. Thus, a glass flake filler of the present embodiment can be manufactured.

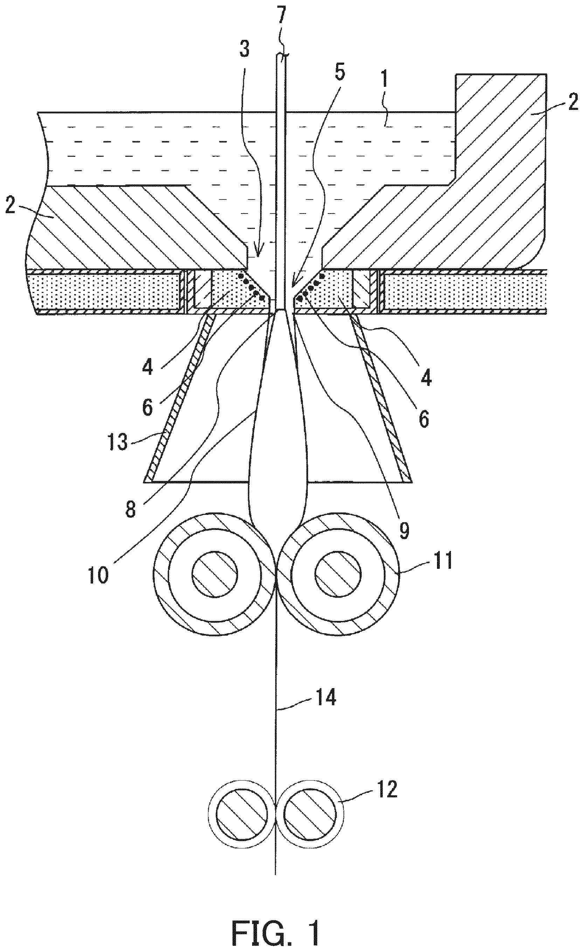

FIG. 1 shows an example of a device for manufacturing a glass film by the blowing process. In FIG. 1, reference numeral 1 denotes a molten glass material, reference numeral 2 denotes a refractory tank furnace, and reference numeral 3 denotes a hole provided in the bottom of the tank furnace. Reference numeral 4 denotes a feeder block having a circular glass outlet 5 smaller than the hole 3. The feeder block 4 is made of cast refractory bricks in which electric heating wires 6 are embedded. The temperature of the molten glass material at the glass outlet 5 is maintained constant by the electric heating wires 6. Reference numeral 7 denotes a blowing nozzle extending through the hole 3 from above the refractory tank furnace 2 to the glass outlet 5. The blowing nozzle 7 has a tip portion 8 defining a circular slit 9 in the glass outlet. The molten glass material that has flowed out through the slit 9 is inflated with gas (for example, air) blown through the blowing nozzle 7 into a hollow shape. Then, the resultant hollow glass is further stretched downward to have an extremely small thickness. Reference numeral 11 denotes a pair of pressure rolls, and reference numeral 12 denotes a pair of stretching rolls. Reference numeral 13 denotes a divergent tubular steel reflecting plate. The hollow glass 10 is insulated by the reflecting plate 13 to be blocked against an external air flow and to be kept warm well, so that the hollow glass 10 is uniformly inflated to be thin. The hollow glass 10 thus inflated is pressed flat by the pressure rolls 11, and the resultant flat glass film 14 is discharged. The glass film thus obtained is pulverized, for example, with a roll. Thus, glass flakes can be obtained. In producing glass flakes with the above device, an appropriate adjustment on the speed of stretching the hollow glass and the pressure of gas to be blown through the blowing nozzle can produce glass flakes having a desired thickness.

The glass flakes thus produced are classified in consideration of desired particle size distribution and particle projected area distribution. Thus, it is possible to produce glass flakes as the flaky particles of the present embodiment.

Although the classification method used in the present embodiment is sieve classification, other classification methods may be used to remove fine particles and coarse particles.

For dry classification, an air classifier such as a gravitational classifier, an inertial classifier, or a centrifugal classifier can be used, for example. The gravitational classifier can be, for example, a horizontal flow type, vertical flow type, or inclined flow type classifier. The inertial classifier can be, for example, a linear type, curving type, or louver type classifier, Elbow-jet, or a variable impactor. The centrifugal classifier can be: a centrifugal classifier making use of air vortex, such as a cyclone, Van tongeren type classifier, or Classiclone type classifier, Dispersion separator, or Microplex; or a centrifugal classifier making use of mechanical rotation, such as Micron separator, a turbo plex, Acucut classifier, or Turbo classifier.

For wet classification, an air classifier such as a gravitational classifier or a centrifugal classifier can be used, for example. The gravitational classifier can be: a gravitational classifier making use of gravity settling tanks, such as a settling tank, a deposition cone, a spitzkasten, or a hydroseparator; a mechanical classifier, such as a drag chain classifier, a rake classifier, a ball classifier, or a spiral classifier; or a hydraulic classifier, such as Dorco sizer, Fahrenwald sizer, a siphon sizer, or a hydroscillator. The centrifugal classifier can be a hydrocyclone, a centrifugal classifier (disk type or decanter type), or the like.

### (Embodiment 2)

In Embodiment 2, the glitter pigment of the present invention will be described.

A glitter pigment of the present embodiment includes flaky particles and at least one layer formed on at least a portion of the surface of each of the flaky particles. The at least one layer is selected from the group consisting of a metal layer and a metal oxide layer. The glitter pigment has a particle size distribution in which a value of D90/D10 is 2.0 or more and 3.0 or less, D10 is 4.7 µm or more and 25 µm or less, and D50 is 17 µm or more and 40 µm or less, where D10 is defined as a particle diameter at 10% of a cumulative volume from a smaller particle diameter, D50 is defined as a particle diameter at 50% of the cumulative volume from the smaller particle diameter, and D90 is defined as a particle diameter at 90% of the cumulative volume from the smaller particle diameter. Moreover, the glitter pigment has a particle projected area distribution in which the following (i) or (ii) is satisfied:
(i) when D50 is 17 µm or more and less than 30 µm, A10 is 100 µm² or more; and
(ii) when D50 is 30 µm or more and 40 µm or less, A10 is 200 µm² or more,
where A10 is defined as a projected area of a particle in a 10th percentile of the total number of particles in ascending order of particle projected area.

The particle size distribution of the glitter pigment of the present embodiment is also measured in accordance with the same principle for the particle size distribution of the flaky particles described above. Moreover, the index indicated by D90/D10 is also as described above. The particle projected area distribution of the glitter pigment of the present embodiment is also measured in accordance with the same principle for the particle projected area distribution of the flaky particles described above. Moreover, the flaky particles to be used in the glitter pigment of the present embodiment, the particle diameters and the particle projected areas of the flaky particles are also defined as described above.

The glitter pigment of the present embodiment has a particle size distribution in which the value of D90/D10 is 2.0 or more and 3.0 or less, D10 is 4.7 µm or more and 25 µm or less, and D50 is 17 µm or more and 40 µm or less. The particle size distribution is narrow in range. This indicates a low amount of fine particles and coarse particles included. In addition, the glitter pigment of the present embodiment has the particle projected area distribution in which the above (i) or (ii) is satisfied, and consequently has a reduced content of fine particles having small areas that cannot be quantified by the laser diffraction/scattering method. Therefore, the glitter pigment of the present embodiment, for example when used as a filler for a cosmetic, a paint, or the like, enhances the glitter and graininess. Moreover, owing to a reduced content of coarse particles as well, the glitter pigment of the present embodiment, for example when used as a pigment for a paint, can suppress the occurrence of a problem such as filter clogging or detection as foreign substances in a coating film.

In the glitter pigment of the present embodiment, at least one selected from the group consisting of a metal layer and a metal oxide layer is provided on at least a portion of the surface of each of the flaky particles serving as the substrate, and the metal layer and/or the metal oxide layer preferably coats the entire flaky particles.

Examples of the flaky particles to be used in the glitter pigment of the present embodiment include mica, synthetic mica, talc, glass flakes, silica flakes, and flaky bismuth oxychloride. Glass flakes among these flaky particles are preferably used as the substrate of a glitter pigment. This is because glass flakes can achieve a higher transparency than other materials and a lower amount of fine particles included accentuates more this high transparency as in the glitter pigment of the present embodiment.

In addition, in the glitter pigment of the present embodiment, the flaky particles described in Embodiment 1 are preferably used as the substrate in order to more easily adjust the particle size distribution of the glitter pigment.

The metal layer to be used for the glitter pigment of the present embodiment can be formed of a metal such as silver, gold, or nickel. By coating flaky particles with such a metal layer, a metallic luster pigment can be obtained. Moreover, the metal oxide layer can be formed of a metal oxide such as titanium oxide or iron oxide. By coating flaky particles with such a metal oxide layer, a pearlescent pigment can be obtained.

In the glitter pigment of the present embodiment, to further narrow down the range of the particle size distribution, the value of D90/D10 may be, for example, 2.6 or more and 2.9 or less.

The upper limit value for A10 of the glitter pigment of the present embodiment is not particularly limited. (i) When D50 is 17 µm or more and less than 30 µm, A10 may be, for example, less than 200 µm², (ii) When D50 is 30 µm or more and 40 µm or less, A10 may be, for example, 300 µm² or less.

The method for coating flaky particles with a metal layer or the like should be any known method. For example, the method disclosed in JP 2001-031421 A or JP 2001-11340 A can be used. According to this method, specifically, to coat flaky particles with, for example, a titanium oxide layer, the flaky particles are suspended in a titanyl sulfate solution or a titanium tetrachloride solution, and the solution is increased in temperature to deposit titania. Thus, a coating film is formed on the surface of each of the flaky particles. However, the method for coating flaky particles is not limited to this method. Any method may be used as long as a thin coating film can be formed on the surface of each of the flaky particles. The thickness of the metal layer or the metal oxide layer is not particularly limited. However, considering glitter achievement and cost, a preferred thickness of a coating film obtained by coating with a metal is, for example, 0.04 to 2 µm, and a preferred thickness of a coating film obtained by coating with a metal oxide is, for example, 0.01 to 1 µm.

The adjustment method for the particle size distribution and the particle projected area distribution of flaky particles (classification method) described in Embodiment 1 can be used for a method for producing a glitter pigment having: a particle size distribution in which the value of D90/D10 is 2.0 or more and 3.0 or less, D10 is 4.7 µm or more and 25 µm or less, and D50 is 17 µm or more and 40 µm or less; and a particle projected area distribution in which the above (i) or (ii) is satisfied. That is, by classifying flaky particles having surfaces each having a metal layer or the like formed thereon, it is possible to produce a glitter pigment having a particle size distribution and a particle projected area distribution like that of the present embodiment.

### Examples

The present invention will be described in more detail with reference to examples. The following examples are illustrative of glass flakes used as the flaky particles. The present invention is not limited to the examples. The flaky particles may be mica, synthetic mica, flaky bismuth oxychloride, or the like.

In the following examples and comparative examples, methods shown below were used to perform shaping in glass flake production, pulverization, and classification for adjusting particle size distribution and particle projected area distribution, measurement of particle size distribution, measurement of particle area distribution, surface coating, and colorimetry. In the present description, "colorimetry" means evaluation of glitter and graininess.

### <Shaping>

Glass was molten at 1200°C, and then stretched while being inflated into a hollow shape by the blowing process. Thus, a thin glass film was obtained. The thin glass film was furthermore cooled to be solidified. Subsequently, the thin glass film was pulverized with a roll to shape glass flakes having an average thickness of 1.3 µm.

### <Pulverization>

The glass flakes having an average thickness of 1.3 µm were pulverized with an impact mill (product name "ACM Pulverizer, Type ACM-10" (manufactured by Hosokawa Micron Corporation)).

The impact mill can be a hammer mill, a cage mill, a pin mill, a pindisk mill, a disintegrator, a screen mill (pulverizer, atomizer, or the like), a turbo mill, a centrifugal classification mill (Super micron mill, Fine micron mill, or the like), or the like.

In the present examples, the impact mill was used to perform pulverization. For example, a roller mill, a ball mill, a stirring mill, a jet mill, a shear mill, a colloid mill, or the like may be used to perform pulverization.

The roller mill can be, for example, a ring roller mill, a centrifugal roller mill, a ball bearing mill, or Szego mill.

The ball mill can be a tumbling ball mill (a pot mill, a tube mill, a conical mill, or the like), a vibration ball mill (a circular vibration mill, a rotary vibration mill, a centrifugal mill, or the like), a planetary mill, or the like.

The stirring mill can be a tower mill (Tower mill or the like), a media agitating mill (Atritor, Aquamizer, Basket mill, CF mill, or the like), a tubular mill (Sand grinder, Dyno mill, Ultra visco mill, or the like), an annular mill (Co-ball mill or the like), or the like.

The jet mill can be a swirling jet mill, an impact jet mill, a fluidized bed jet mill, a wet jet mill, or the like.

The shear mill can be an automated mortar, Angmill, or the like.

The colloid mill can be a mortar, a stone mill, or the like.

### <Classification>

The glass flakes pulverized were subjected to the above-described sieve classification to adjust the particle size distribution and the particle projected area distribution.

The vibrating sieve used was an electromagnetic sieve shaker (product name "RETSCH SIEVE SHAKER, type VIBRO" (manufactured by Retsch GmbH)). The test sieves used each had ϕ200 mm and a height of 45 mm. The test sieves prepared were sieves having opening sizes of 20, 32, 38, and 45 µm (manufactured by Iida Seisakusho, Co., Ltd.). A suitable sieve was selected as appropriate for desired particle size distribution and particle projected area distribution.

Sieving was performed in the following manner. A sieve with a predetermined coarse mesh, a sieve with a predetermined fine mesh, and a receiving pan were stacked in this order as the top, the middle, and the bottom, and were set up in the electromagnetic sieve shaker for sieving for a predetermined time. Coarse particles were removed with the upper sieve, and the glass flakes including reduced coarse particles fell onto the middle sieve. Fine particles were removed with the middle sieve to be fallen down through the sieve. As a result, the glass flakes, from which both the coarse particles and the fine particles had been removed, remained on the middle sieve. These glass flakes were thus obtained as flaky particles of the present invention with a narrow range of particle size distribution. An appropriate adjustment was performed for the average particle diameter of the glass flakes before sieving, the opening sizes of the sieves, the sieving power, and the sieving time, so that glass flakes to be collected had various particle size distributions and particle projected area distributions.

### <Measurement of particle size distribution by laser diffraction/scattering method>

The particle size distribution of the glass flakes was measured with a laser diffraction particle size distribution analyzer (product name "Microtrack MT3300EX II" (manufactured by Nikkiso Co., Ltd.)). From the measurement results, the average particle diameter D50, D90, and D10 of the glass flakes were read out, and furthermore the value of D90/D10 was calculated to determine whether the range of the particle size distribution was wide or narrow. In the particle size distribution, D10 was defined as a particle diameter at 10% of a cumulative volume from a smaller particle diameter, D50 was defined as a particle diameter at 50% of the cumulative volume from the smaller particle diameter, and D90 was defined as a particle diameter at 90% of the cumulative volume from the smaller particle diameter.

### <Measurement of particle area distribution by image analysis method>

Simultaneously with the measurement of the particle size distribution by the laser diffraction/scattering method, the particle area distribution of the glass flakes was measured by an image analysis method. The measurement of the particle projected area distribution was performed with an image analyzer (product name "PartAn SI" (manufactured by MicrotracBEL Corp.)). From the measurement results, A10 was read out. In the particle area distribution, A10 was defined as the projected area of a particle in the 10th percentile of the total number of particles in ascending order of particle projected area.

### <Surface coating>

Surface coating of the glass flakes was performed by the following method. First, ion exchanged water was added to 50 g of the glass flakes to obtain 0.5 liters of mixed water. An amount of 35 mass% of hydrochloric acid was added to the mixed water to adjust to pH 1.0, and the mixed water was heated to 75°C and stirred. While the stirring was performed, an aqueous titanium tetrachloride solution (containing Ti in 16.5 mass%) was added quantitatively to the mixed water at a rate of 12 g per hour, and an aqueous caustic soda solution (containing caustic soda in 10 mass%) was added to the mixed water at a rate of 60 ml per hour. The stirring was continued until the mixed water exhibited a silver pearl tone with glitter. Once the target color tone was obtained, the product was collected by filtration under reduced pressure and washed with pure water. The product washed was dried at 150°C and then baked at 600°C. Thus, the glass flakes having coated surfaces (glitter pigment) were obtained.

### <Colorimetry>

The glitter pigment obtained was subjected to colorimetry, that is, evaluation of glitter and graininess. First, the sample glitter pigment was added to an acrylic resin paint (product name "Acrylic Auto Clear Super" (manufactured by Nippon Paint Co., Ltd.) having a solid content of approximately 50 mass%) so as to have a content of 1 mass% in the resin. Mixing and stirring were performed well to obtain a mixture. Next, the mixture obtained was applied onto a hiding power test paper with an applicator having a clearance of 9 mils (9/1000 inches), and dried. Thus, a coated paper was obtained. The coated paper obtained was subjected to measurement of sparkle intensity (S_i45) and sparkle area (S_a45) at a light-receiving angle of 45 degrees to the specular reflected light angle, with a multiangle spectrophotometer (product name "BYK-mac" (manufactured by BYK Gardner Gmbh)). In the colorimetry in the present examples, the "specular reflected light" means specular reflected light for the case where the light incident angle is 45 degrees to the normal direction of the observation surface of the coated paper. Accordingly, the "specular reflected light angle" is 45 degrees to the normal direction of the observation surface of the coated paper. At a light-receiving angle of 45 degrees to the specular reflected light angle, it is possible to evaluate glitter and graininess for the case where the observation surface of the coated paper is viewed from the normal direction, that is, from the front. In this way, with the multiangle spectrophotometer, sparkle intensity (S_i) and sparkle area (S_a) can be measured for each of light-receiving angles. In particular, by measuring the sparkle intensity (S_i45) and the sparkle area (S_a45) at a light-receiving angle of 45 degrees to the specular reflected light angle, superiority or inferiority of the glitter and graininess of the observation surface of the coated paper by visual observation can be quantitatively evaluated. A smaller sparkle area (S_a45) and a higher sparkle intensity (S_i45) more reduces the white blur of the observation surface of the coated paper by visual observation and more enhances the glitter.

### (Example 1)

Glass flakes having an average thickness of 1.3 µm were pulverized to have an average particle diameter D50 of 51.9 µm. The glass flakes pulverized were subjected to sieve classification under the conditions shown in Table 1.

### (Comparative Example 1)

Glass flakes having an average thickness of 1.3 µm were pulverized to have an average particle diameter D50 of 46.0 µm. The glass flakes pulverized were subjected to sieve classification under the conditions shown in Table 1. In the classification, test sieves having the same opening sizes as those in Example 1 were used, and the sieving time was varied so that the particle diameters (the average particle diameter, D90, and D10) after sieving were almost equal to each other.

The glass flakes of Example 1 and Comparative Example 1 after classification were subjected to each of measurement of volumetric particle size distribution by the laser diffraction/scattering method and measurement of particle projected area distribution by the image analysis method. The results are shown in Table 1.

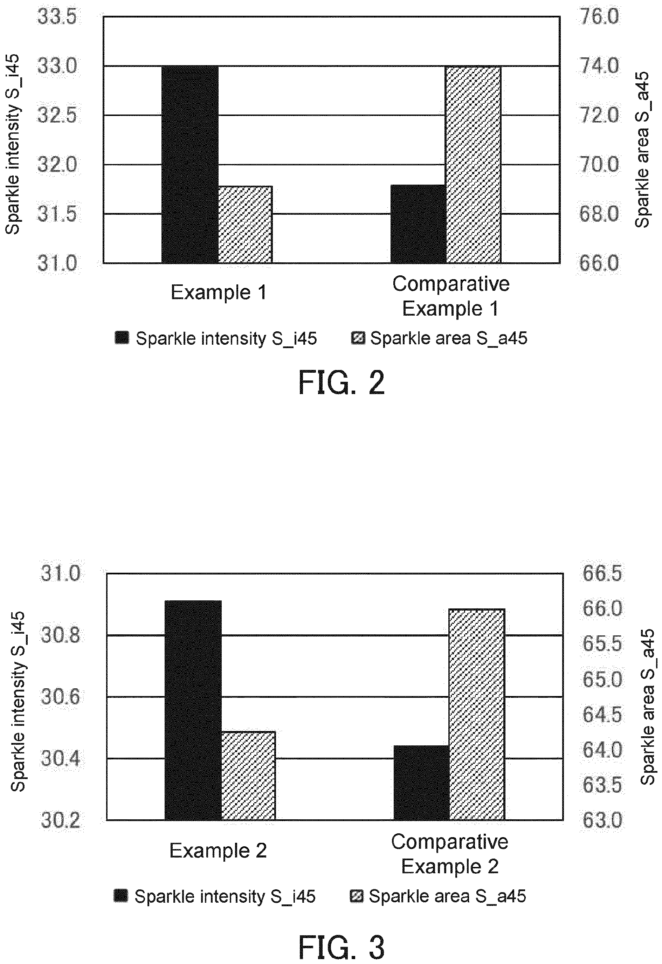

The glass flakes of Example 1 and Comparative Example 1 after classification were furthermore subjected to surface coating with titanium oxide under the same conditions. The glass flakes after surface coating were subjected to colorimetry. The results are shown in Table 1 and FIG. 2. FIG. 2 is a graph showing the colorimetric results for the glass flakes after surface coating of Example 1 and Comparative Example 1. In FIG. 2, the left vertical axis represents sparkle intensity (S_i45), and the right vertical axis represents sparkle area (S_a45). The same applies to the graphs in FIG. 3 to FIG. 5 described later.

**[Table 1]**

| | | | Example 1 | Comparative Example 1 |
|---|---|---|---|---|
| Laser diffraction/ scattering method (Volume distribution) | Pulverization | Average particle diameter D50 (µm) | 51.9 | 46.0 |
| | Classification | Sieving time (min) | 10 | 15 |
| | | Upper sieve opening (µm) | 45 | 45 |
| | | Middle sieve opening (µm) | 20 | 20 |
| | | Average particle diameter D50 (µm) | 31.1 | 32.5 |
| | | Particle diameter D90 (µm) | 50.6 | 52.0 |
| | | Particle diameter D10 (µm) | 19.1 | 20.1 |
| | | D90/D10 | 2.65 | 2.59 |
| Image analysis method (Projected area distribution) | Classification | Projected area distribution A10 (µm²) | 232.3 | 174.4 |
| Colorimetric results | Sparkle intensity S_i45 | | 32.99 | 31.79 |
| | Sparkle area S_a45 | | 69.12 | 73.96 |

### (Example 2)

Glass flakes having an average thickness of 1.3 µm were pulverized to have an average particle diameter D50 of 60.8 µm. The glass flakes pulverized were subjected to sieve classification under the conditions shown in Table 2. In the classification, test sieves having the same opening sizes as those in Example 1 were used.

### (Comparative Example 2)

Glass flakes having an average thickness of 1.3 µm were pulverized to have an average particle diameter D50 of 53.8 µm. The glass flakes pulverized were subjected to sieve classification under the conditions shown in Table 2. In the classification, test sieves having the same opening sizes as those in Example 2 were used, and the sieving time was varied so that the particle diameters after sieving were almost equal to each other.

The glass flakes of Example 2 and Comparative Example 2 after classification were subjected to each of measurement of volumetric particle size distribution by the laser diffraction/scattering method and measurement of particle projected area distribution by the image analysis method. The results are shown in Table 2.

The glass flakes of Example 2 and Comparative Example 2 after classification were furthermore subjected to surface coating with titanium oxide under the same conditions. The glass flakes after surface coating were subjected to colorimetry by the above-described method. The results are shown in Table 2 and FIG. 3. FIG. 3 is a graph showing the colorimetric results for the glass flakes after surface coating of Example 2 and Comparative Example 2.

**[Table 2]**

| | | | Example 2 | Comparative Example 2 |
|---|---|---|---|---|
| Laser diffraction/ scattering method (Volume distribution) | Pulverization | Average particle diameter D50 (µm) | 60.8 | 53.8 |
| | Classification | Sieving time (min) | 15 | 20 |
| | | Upper sieve opening (µm) | 45 | 45 |
| | | Middle sieve opening (µm) | 20 | 20 |
| | | Average particle diameter D50 (µm) | 34.9 | 37.7 |
| | | Particle diameter D90 (µm) | 56.7 | 61.5 |
| | | Particle diameter D10 (µm) | 21.3 | 22.0 |
| | | D90/D10 | 2.66 | 2.79 |
| Image analysis method (Projected area distribution) | Classification | Projected area distribution A10 (µm²) | 256.3 | 153.7 |
| Colorimetric results | Sparkle intensity S_i45 | | 30.91 | 30.44 |
| | Sparkle area S_a45 | | 64.25 | 65.98 |

### (Example 3)

Glass flakes having an average thickness of 1.3 µm were pulverized to have an average particle diameter D50 of 30.5 µm. The glass flakes pulverized were subjected to sieve classification under the conditions shown in Table 3.

### (Comparative Example 3)

Glass flakes having an average thickness of 1.3 µm were pulverized to have an average particle diameter D50 of 23.5 µm. The glass flakes pulverized were subjected to sieve classification under the conditions shown in Table 3. In the classification, test sieves having the same opening sizes as those in Example 3 were used, and the sieving time was varied so that the particle diameters after sieving were almost equal to each other.

The glass flakes of Example 3 and Comparative Example 3 after classification were subjected to each of measurement of volumetric particle size distribution by the laser diffraction/scattering method and measurement of particle projected area distribution by the image analysis method. The results are shown in Table 3.

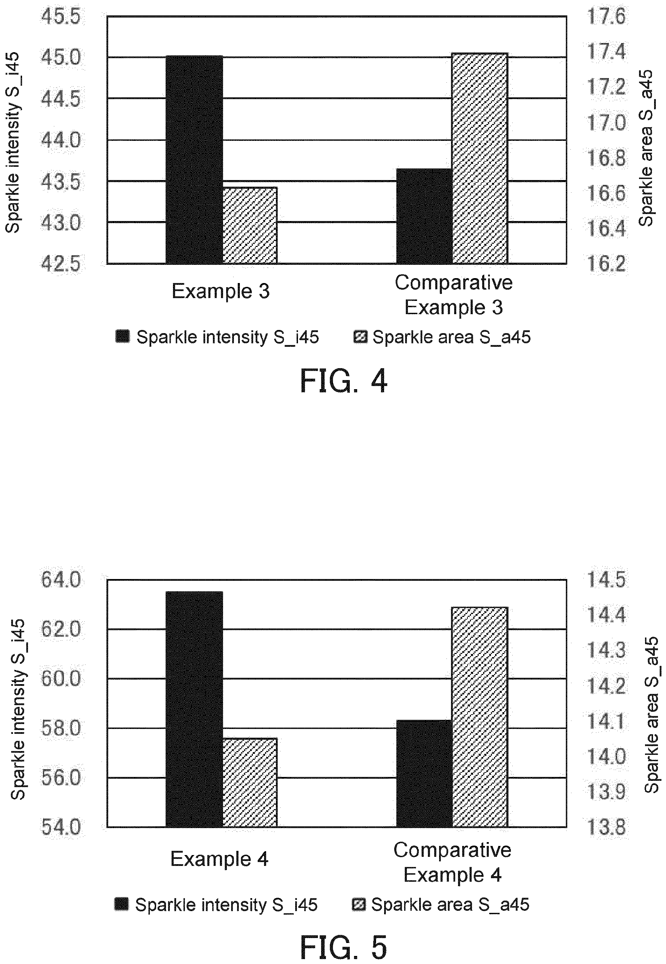

The glass flakes of Example 3 and Comparative Example 3 after classification were furthermore subjected to surface coating with titanium oxide under the same conditions. The glass flakes after surface coating were subjected to colorimetry by the above-described method. The results are shown in Table 3 and FIG. 4. FIG. 4 is a graph showing the colorimetric results for the glass flakes after surface coating of Example 3 and Comparative Example 3.

**[Table 3]**

| | | | Example 3 | Comparative Example 3 |
|---|---|---|---|---|
| Laser diffraction/ scattering method (Volume distribution) | Pulverization | Average particle diameter D50 (µm) | 30.5 | 23.5 |
| | Classification | Sieving time (min) | 10 | 15 |
| | | Upper sieve opening (µm) | 32 | 32 |
| | | Middle sieve opening (µm) | 20 | 20 |
| | | Average particle diameter D50 (µm) | 19.0 | 18.0 |
| | | Particle diameter D90 (µm) | 31.5 | 30.7 |
| | | Particle diameter D10 (µm) | 11.7 | 10.4 |
| | | D90/D10 | 2.68 | 2.94 |
| Image analysis method (Projected area distribution) | Classification | Projected area distribution A10 (µm²) | 125.3 | 77.5 |
| Colorimetric results | Sparkle intensity S_i45 | | 45.01 | 43.64 |
| | Sparkle area S_a45 | | 16.63 | 17.39 |

### (Example 4)

Glass flakes having an average thickness of 1.3 µm were pulverized to have an average particle diameter D50 of 39.9 µm. The glass flakes pulverized were subjected to sieve classification under the conditions shown in Table 4.

### (Comparative Example 4)

Glass flakes having an average thickness of 1.3 µm were pulverized to have an average particle diameter D50 of 32.5 µm. The glass flakes pulverized were subjected to sieve classification under the conditions shown in Table 4. In the classification, test sieves having the same opening sizes as those in Example 4 were used, and the sieving time was varied so that the particle diameters after sieving were almost equal to each other.

The glass flakes of Example 4 and Comparative Example 4 after classification were subjected to each of measurement of volumetric particle size distribution by the laser diffraction/scattering method and measurement of particle projected area distribution by the image analysis method. The results are shown in Table 4.

The glass flakes of Example 4 and Comparative Example 4 after classification were furthermore subjected to surface coating with titanium oxide under the same conditions. The glass flakes after surface coating were subjected to colorimetry. The results are shown in Table 4 and FIG. 5. FIG. 5 is a graph showing the colorimetric results for the glass flakes after surface coating of Example 4 and Comparative Example 4.

**[Table 4]**

| | | | Example 4 | Comparative Example 4 |
|---|---|---|---|---|
| Laser diffraction/ scattering method (Volume distribution) | Pulverization | Average particle diameter D50 (µm) | 39.9 | 32.5 |
| | Classification | Sieving time (min) | 10 | 15 |
| | | Upper sieve opening (µm) | 38 | 38 |
| | | Middle sieve opening (µm) | 20 | 20 |
| | | Average particle diameter D50 (µm) | 24.2 | 21.1 |
| | | Particle diameter D90 (µm) | 40.9 | 35.6 |
| | | Particle diameter D10 (µm) | 14.1 | 12.0 |
| | | D90/D 10 | 2.89 | 2.98 |
| Image analysis method (Projected area distribution) | Classification | Projected area distribution A10 (µm²) | 105.4 | 91.8 |
| Colorimetric results | Sparkle intensity S_i45 | | 63.48 | 58.29 |
| | Sparkle area S_a45 | | 14.05 | 14.42 |

The following can be understood from Tables 1 to 4. Examples 1 to 4, as compared respectively with Comparative Examples 1 to 4, were small in sparkle area (S_a45) but were high in sparkle intensity (S_i45), exhibiting enhanced glitter and graininess. The respective comparisons of Examples 1 to 4 with Comparative Examples 1 to 4 demonstrate that the values of the volumetric particle size distribution measured by the laser diffraction/scattering method were almost equal to each other, whereas the values of the particle projected area distribution measured by the image analysis method were different from each other. More specifically, the respective comparisons of Examples 1 to 4 with Comparative Examples 1 to 4 demonstrate that the values of D90/D10, which indicates the range of the particle size distribution, were almost equal to each other. However, when Examples 3 and 4 are compared respectively with Comparative Examples 3 and 4, all of which had an average particle diameter D50 of 17 µm or more and less than 30 µm after classification, it is demonstrated that Examples 3 and 4 had A10 of 100 µm² or more, whereas Comparative Examples 3 and 4 had A10 of less than 100 µm². When Examples 1 and 2 are compared respectively with Comparative Examples 1 and 2, all of which had an average particle diameter D50 of 30 µm or more and 40 µm or less after classification, it is demonstrated that Examples 1 and 2 had A10 of 200 µm² or more, whereas Comparative Examples 3 and 4 had A10 of less than 200 µm². This seems to be due to the fact that quantification of A10 in the particle projected area distribution by the image analysis method succeeded in reduction of the content of fine particles having small areas that cannot be quantified by the laser diffraction/scattering method.

A larger amount of fine particles included in the glass flakes pulverized requires a longer sieving time in classification in order to increase the amount of fine particles to be fallen down through the middle sieve. This inevitably increases the amount of coarse particles to be fallen down through the upper sieve. Consequently, a longer sieving time causes a larger amount of coarse particles to be included in the glass flakes remaining on the middle sieve. Therefore, D90 tends to exhibit a high numerical value to cause the value of D90/D10 to exceed the range of 2.0 to 3.0. In the present examples, in contrast, to reduce the amount of fine particles included in the glass flakes after pulverization, the average particle diameter of the glass flakes in pulverization was increased to shorten the sieving time. This controlled the value of D90/D10, D10, D50, and A10 after classification. Specifically, the glass flakes were pulverized to have a large D50 after pulverization, thereby reducing the amount of fine particles included in the glass flakes after pulverization. Thus, even for a shortened sieving time, it is possible to reduce the amount of fine particles included in the glass flakes remaining on the middle sieve. In addition, for a shortened sieving time, it is possible to reduce the amount of coarse particles to be fallen down through the upper sieve.

### INDUSTRIAL APPLICABILITY

The flaky particles and the glitter pigment of the present invention are suitably used as a filler for imparting glitter to cosmetics, paint compositions, resin compositions, ink compositions, and the like.

## Claims

1. Flaky particles, wherein
the flaky particles have a particle size distribution in which a value of D90/D10 is 2.0 or more and 3.0 or less, D10 is 4.7 µm or more and 25 µm or less, and D50 is 17 µm or more and 40 µm or less,
where D10 is defined as a particle diameter at 10% of a cumulative volume from a smaller particle diameter, D50 is defined as a particle diameter at 50% of the cumulative volume from the smaller particle diameter, and D90 is defined as a particle diameter at 90% of the cumulative volume from the smaller particle diameter, and
the flaky particles have a particle projected area distribution in which the following (i) or (ii) is satisfied:
(i) when D50 is 17 µm or more and less than 30 µm, A10 is 100 µm² or more; and
(ii) when D50 is 30 µm or more and 40 µm or less, A10 is 200 µm² or more,
where A10 is defined as a projected area of a particle in a 10th percentile of the total number of particles in ascending order of particle projected area.

2. The flaky particles according to claim 1, wherein
the flaky particles are made of glass.

3. A glitter pigment comprising:
flaky particles; and
at least one layer formed on at least a portion of a surface of each of the flaky particles, the at least one layer being selected from the group consisting of a metal layer and a metal oxide layer, wherein
the glitter pigment has a particle size distribution in which a value of D90/D10 is 2.0 or more and 3.0 or less, D10 is 4.7 µm or more and 25 µm or less, and D50 is 17 µm or more and 40 µm or less,
where D10 is defined as a particle diameter at 10% of a cumulative volume from a smaller particle diameter, D50 is defined as a particle diameter at 50% of the cumulative volume from the smaller particle diameter, and D90 is defined as a particle diameter at 90% of the cumulative volume from the smaller particle diameter, and
the glitter pigment has a particle projected area distribution in which the following (i) or (ii) is satisfied:
(i) when D50 is 17 µm or more and less than 30 µm, A10 is 100 µm² or more; and
(ii) when D50 is 30 µm or more and 40 µm or less, A10 is 200 µm² or more,
where A10 is defined as a projected area of a particle in a 10th percentile of the total number of particles in ascending order of particle projected area.

4. The glitter pigment according to claim 3, wherein
the flaky particles have a particle size distribution in which a value of D90/D10 is 2.0 or more and 3.0 or less, D10 is 4.7 µm or more and 25 µm or less, and D50 is 17 µm or more and 40 µm or less,
where D10 is defined as a particle diameter at 10% of a cumulative volume from a smaller particle diameter, D50 is defined as a particle diameter at 50% of the cumulative volume from the smaller particle diameter, and D90 is defined as a particle diameter at 90% of the cumulative volume from the smaller particle diameter, and
the flaky particles have a particle projected area distribution in which the following (i) or (ii) is satisfied:
(i) when D50 is 17 µm or more and less than 30 µm, A10 is 100 µm² or more; and
(ii) when D50 is 30 µm or more and 40 µm or less, A10 is 200 µm² or more,
where A10 is defined as a projected area of a particle in a 10th percentile of the total number of particles in ascending order of particle projected area.

5. The glitter pigment according to claim 3 or 4, wherein
the flaky particles are made of glass.
